Europäisches Patentamt

European Patent Office

Office européen des brevets

(19)

(11) Numéro de publication: **0 267 844**
A2

## (12) DEMANDE DE BREVET EUROPEEN

(21) Numéro de dépôt: **87402427.6**

(22) Date de dépôt: **27.10.87**

(51) Int. Cl.⁴: **B 26 F 3/00**
$H\ 05\ K\ 3/00,\ B\ 65\ H\ 41/00$

(30) Priorité: **14.11.86 FR 8615851**

(43) Date de publication de la demande:
**18.05.88 Bulletin 88/20**

(84) Etats contractants désignés:
**AT BE CH DE ES GB GR IT LI LU NL SE**

(71) Demandeur: **Limon, Claude**
**12 Allée des Eiders**
**F-75008 Paris (FR)**

**Delcampe, Pierre**
**44, Avenue Montesquieu**
**F-93190 Livry-Gargan (FR)**

(72) Inventeur: **Limon, Claude**
**12 Allée des Eiders**
**F-75008 Paris (FR)**

**Delcampe, Pierre**
**44, Avenue Montesquieu**
**F-93190 Livry-Gargan (FR)**

(74) Mandataire: **Armengaud Ainé, Alain**
**Cabinet ARMENGAUD AINE 3 Avenue Bugeaud**
**F-75116 Paris (FR)**

(54) Dispositif pour enlever en continu et au défilé des films plastiques sur une plaque, notamment une plaque de circuit imprimé.

(57) Dispositif pour enlever en continu et au défilé des films de matière synthétique et notamment des films de matière plastique sur des plaques telles que des plaques de circuits imprimés caractérisé en ce qu'il comporte :
- un convoyeur d'alimentation (10), pour délivrer successivement en continu et dans une position sensiblement horizontale les plaques (P) recouvertes du film en matière plastique ;
- au moins un galets rotatif (12-12') placé de chaque côté du trajet desdites plaques (P), en regard d'un contre-cylindre (16), de manière que chaque plaque délivrée par le convoyeur d'alimentation passe successivement entre l'un (12) desdits galets situés d'un côté de la plaque et son contre-cylindre (16) puis entre un autre galet (12') situé de l'autre côté de la plaque et son contre-cylindre (16') ;
- des griffes (22-22') montées sur un secteur périphérique de chaque galet (12-12'), la conformation de ces griffes étant telle qu'elles accrochent le film pour en amorcer le décollement lors du passage de la plaque entre les galets et les contre-cylindres correspondants ;
- au moins une pince (30-30') portée par un galet (26-26') de même axe (14) que celui des galets porte-griffes (12-12'), ce galet porte-pince étant actionné par un vérin de manière à assurer le décollement du film plastique (F-F') puis son guidage

en vue de son évacuation et,
- des moyens (32-34) pour assurer l'évacuation des films ainsi décollés des surfaces desdites plaques.

Fig. 1

## Description

Dispositif pour enlever en continu et au défilé des films plastiques sur une plaque, notamment une plaque de circuit imprimé.

La présente invention concerne un dispositif permettant d'enlever automatiquement, en continu et au défilé, des films ou pellicules de matière plastique, préalablement laminés sur des plaques, et plus particulièrement sur des plaques de circuits imprimés.

On sait que, dans certains domaines de la technique, notamment dans celui des circuits imprimés, on protège des produits plats, en forme de plaques, à l'aide de minces pellicules ou films de matière synthétique, notamment de matière plastique, laminés sur la surface des plaques à protéger. Il convient naturellement d'enlever ces films ou pellicules de matière plastique et cet enlèvement est généralement effectué de façon manuelle.

La présente invention se propose d'apporter un dispositif automatique pour l'enlèvement de telles pellicules.

A cet effet l'invention concerne un dispositif pour enlever en continu et au défilé des films plastiques sur des plaques notamment des plaques de circuits imprimés, caractérisé en ce qu'il comporte essentiellement:

- un convoyeur d'alimentation, pour délivrer successivement en continu, dans une position sensiblement horizontale, les plaques recouvertes du film en matière plastique ;

- au moins un galet rotatif, placé de chaque côté du trajet des plaques, en regard d'un contre-cylindre, de manière que chaque plaque délivrée par le convoyeur d'alimentation passe successivement entre l'un desdits galets, situé d'un côté de la plaque et son contre-cylindre, puis entre un autre galet, situé de l'autre côté de la plaque et son contre-cylindre ;

- des griffes, montées sur un secteur de chaque galet, la conformation de ces griffes étant telle qu'elles accrochent le film pour en amorcer le décollement lors du passage de la plaque entre les galets et les contre-cylindres correspondants ;

- au moins une pince portée par un galet, de même axe que celui des galets mentionnés ci-dessus, actionnée par un vérin de manière à assurer le décollement du film plastique et son guidage lors de son évacuation et,

- des moyens pour assurer l'évacuation des films ainsi décollés des surfaces desdites plaques.

Selon l'invention, les griffes qui assurent l'amorce du décollement du film sont constituées par des lamelles métalliques de préférence du type cardes à limes montées sur des supports en forme de secteurs circulaires, fixés sur la périphérie desdits galets, ceux-ci pouvant subir une rotation de quelques degrés lorsque les griffes viennent accrocher et pincer le film à détacher.

Selon une autre caractéristique de cette invention, les galets porte-griffes ainsi que les galets porte-pinces sont actionnés respectivement à l'aide de vérins, de préférence pneumatiques. Les galets porte-griffes sont actionnés par lesdits vérins à l'instant précis où le bord de la plaque dont on veut enlever le film protecteur se présente.

Selon une autre caractéristique de cette invention, chaque contre-cylindre est monté sur un support permettant un déplacement vertical dudit contre-cylindre, ce déplacement étant commandé par une came montée sur l'axe des galets porte-griffes et qui est actionné dès que le film plastique est pincé puis décollé de manière à éloigner le contre-cylindre pendant la rotation des galets porte-griffes.

Selon une autre caractéristique de cette invention, le dispositif comporte deux paires de galets porte-griffes, un galet porte-pinces étant placé entre les galets de chaque paire de galets porte-griffes.

D'autres caractéristiques et avantages de la présente invention ressortiront de la description faite ci-après, en référence aux dessins annexés, d'un exemple de réalisation dépourvu de tout caractère limitatif. sur le dessin :

La figure 1 représente schématiquement, en élévation latérale, le dispositif objet de l'invention en cours de fonctionnement ;

La figure 2 est une vue schématique partielle représentant le dispositif de l'invention en élévation frontale ;

Les figures 3 et 4 sont respectivement des vues partielles, à plus grande échelle, en élévation frontale et latérale d'une paire de galets porte-griffes entre lesquels est placé un galet porte-pince et

La figure 5 est une vue partielle à échelle agrandie montrant comment s'effectue le décollement du film protecteur par les griffes des galets portegriffes.

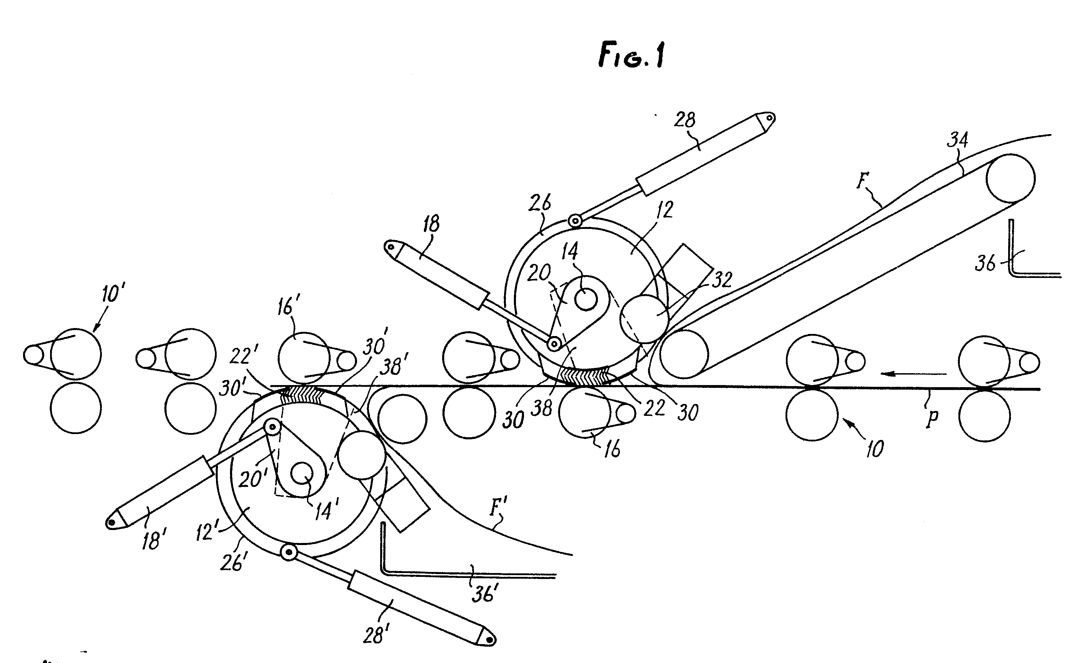

On se réfère en premier lieu à la figure 1.

Sur cette figure on voit que les plaques P, par exemple des plaques de circuit imprimé dont les surfaces sont recouvertes d'une pellicule en matière plastique préalablement laminée, sont délivrées en continu, les unes à la suite des autres, à l'aide d'un convoyeur à galets, d'un type connu, désigné dans son ensemble par la référence 10.

Le dispositif d'enlèvement de la pellicule ou film en matière plastique comprend deux ensembles identiques placés de chaque côté de la plaque P, de manière à détacher la pellicule de chaque surface (supérieure et inférieure) de ladite plaque. Chaque ensemble du dispositif d'enlèvement comprend selon l'invention un ou plusieurs galets 12 montés sur un axe commun 14 et actionnés par un vérin 18, de préférence pneumatique, par l'intermédiaire d'une bielle 20. Sur chacun de ces galets 12 est prévu un système de griffe 22 assurant le décollement de la pellicule des plaques P. Ces griffes 22 sont constituées de préférence par des lamelles métalliques qui sont montées sur un support en forme de secteur fixé sur la périphérie du galet porte-griffes 12 correspondant. En regard du système de galets porte-griffes 12, on prévoit un contre-cylindre 16, le montage étant tel que les plaques P passent entre les galets porte-griffes et le contre-cylindre correspondant ainsi qu'on le voit clairement sur la figure 1.

Le contre-cylindre 16 est monté sur un support, de préférence du type parallèlogramme permettant un déplacement vertical, ce déplacement étant commandé à l'aide d'une came 38 solidaire de l'axe 14.

Le dispositif comporte par ailleurs au moins un galet 26 sur lequel sont montées des pinces telles que 30. Chaque galet porte-pinces peut être entraîné à l'aide d'un vérin 28, de préférence pneumatique.

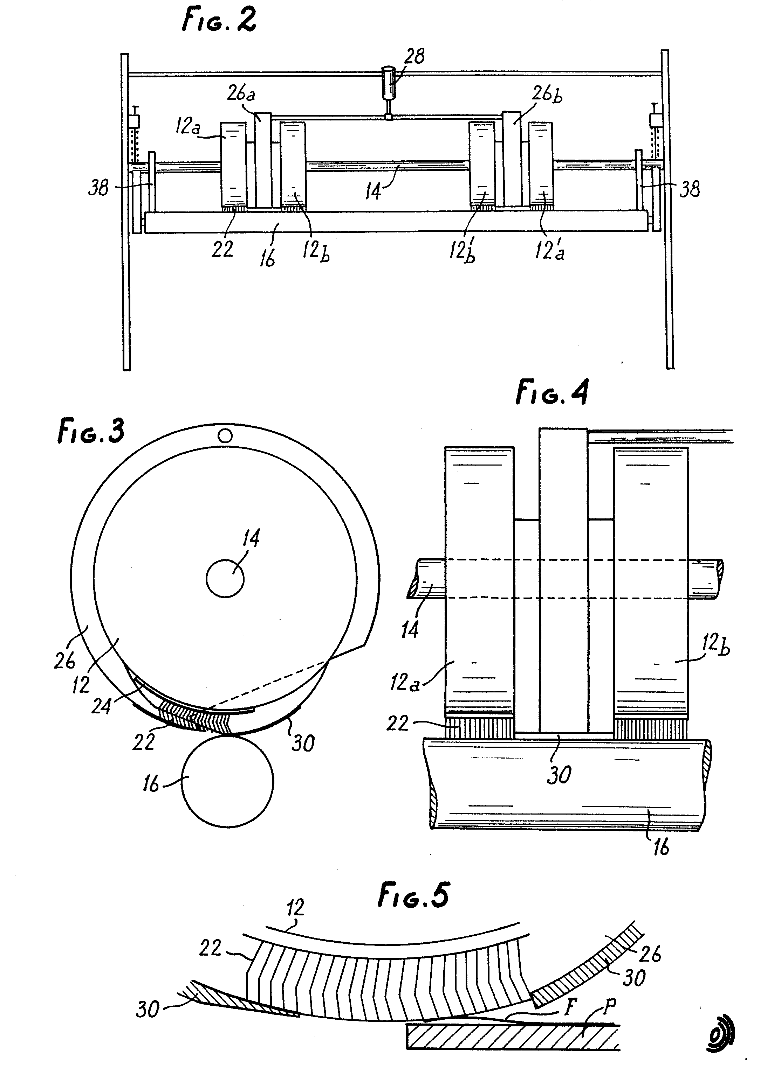

Dans le mode de réalisation représenté à titre d'exemple sur les figures 2 à 4, on voit que le dispositif comporte deux paires de galets porte-griffes désignés respectivement par les références 12a, 12b et 12'a 12'b montés sur le même axe 14 et deux galets porte-pinces 26a 26b respectivement placés entre les galets des paires de galets porte-griffes. Sur la figure 2, on voit clairement le montage du vérin 28 commandant les galets porte-pinces et les cames telles que 38 de commande du contre-cylindre 16. Sur la figure 3, on peut voir le montage des pinces telles que 30 d'un galet porte-pinces 26.

Sur la figure 1 le second ensemble assurant le décollement puis l'enlèvement de la pellicule F' située sur la surface inférieure des plaques P comporte les mêmes éléments que ceux du premier ensemble décrit ci-dessus, affecté des mêmes références pourvues de l'indice (').

Le dispositif est complété par des convoyeurs à cordes tels que 34 et des rouleaux presseurs correspondants tels que 32 de manière à assurer l'évacuation et le transport des films F et F' détachés respectivement de la surface supérieure et de la surface inférieure de la plaque P, ces films étant emmagasinés ensuite dans des récipients de stockage 36 36'.

Le fonctionnement du dispositif ainsi décrit est le suivant :

Les plaques telles que P sont ammenées successivement en continu par le convoyeur à rouleau 10, de manière que le bord antérieur de chaque plaque passe successivement entre les griffes 22 et le contre-cylindre correspondant 16 (ou 16') placé en regard des galets porte-griffes 12 (ou 12'). Dès que le bord antérieur de la plaque passe entre ces deux éléments 22 et 16, le vérin 18 est actionné de manière à provoquer une rotation de quelques degrés des galets porte-griffes (voir la figure 5) et les griffes 22 accrochent la pellicule correspondante par exemple F. Ensuite, les galets porte-pinces 26 sont actionnés par le vérin 28 de manière à serrer la pellicule et dès que cette pellicule F a été décollée puis pincée, la came 38 éloigne le contre-cylindre 16 en l'écartant légèrement des galets porte-griffes de manière à éviter tout talonnement de ce contre-cylindre sur la plaque libérée du film plastique F (ou F').

Après décollement du film F de la surface supérieure de la plaque P, la plaque continuant son avance, le film F est introduit dans le système d'évacuation constitué par le rouleau 232 et le convoyeur 34, les pinces 30 lâchent leur prise (sous l'effet d'une rotation des galets porte-pinces 26 par l'intermédiaire du vérin 28) et le film ainsi décollé peut être évacué puis stocké dans le magasin 36.

La plaque P débarassée de sa pellicule supérieure F continue son avance et elle passe ensuite dans le second ensemble, identique au premier, assurant le décollement puis l'enlèvement du film inférieur F' lequel est stocké dans le magasin 36'.

Il demeure bien entendu que cette invention n'est pas limitée aux exemples de réalisation décrits et représentés mais qu'elle en englobe toutes les variantes.

**Revendications**

1- Dispositif pour enlever en continu et au défilé des films de matière synthétique et notamment des films de matière plastique sur des plaques telles que des plaques de circuits imprimés caractérisé en ce qu'il comporte :

- un convoyeur d'alimentation (10), pour délivrer successivement en continu et dans une position sensiblement horizontale les plaques (P) recouvertes du film en matière plastique ;

- au moins un galet rotatif (12-12') placé de chaque côté, du trajet desdites plaques (P), en regard d'un contre-cylindre (16), de manière que chaque plaque délivrée par le convoyeur d'alimentation passe successivement entre l'un (12) desdits galets situés d'un côté de la plaque et son contre-cylindre (16) puis entre un autre galet (12') situé de l'autre côté de la plaque et son contre-cylindre (16') ;

- des grifffes (22-22') montées sur un secteur périphérique de chaque galet (12-12'), la conformation de ces griffes étant telle qu'elles accrochent le film pour en amorcer le décollement lors du passage de la plaque entre les galets et les contre-cylindres correspondants ;

- au moins une pince (30-30') portée par un galet (26-26') de même axe (14) que celui des galets porte-griffes (12-12'), ce galet porte-pince étant actionné par un vérin de manière à assurer le décollement du film plastique (F-F') puis son guidage en vue de son évacuation et,

- des moyens (32-34) pour assurer l'évacuation des films ainsi décollés des surfaces desdites plaques.

2- Dipositif selon la revendication 1 caractérisé en ce que les griffes (22-22') qui assurent l'amorce du décollement du film (F-F') sont constituées par des lamelles métalliques montées sur des supports en forme de secteurs circulaires, fixés sur la périphérie des galets porte-griffes (12-12'), ceux-ci pouvant subir une rotation de quelques degrés lorsque les griffes viennent accrocher et pincer le film à détacher.

3- Dispositif selon l'une quelconque des revendications précédentes caractérisé en ce que, les galets porte-griffes (12-12') ainsi que les galets porte-pinces (26-26') sont actionnés respectivement à l'aide de vérins (18, 18'-28, 28') de préférence pneumatiques, les galets porte-griffes étant actionnés par lesdits vérins à l'instant précis où se présente le bord de la plaque dont on veut enlever le film protecteur.

4-Dispositif selon l'une quelconque des revendications précédentes caractérisé en ce que chaque contre-cylindre (16-16') est monté sur un support permettant un déplacement vertical, ce déplacement étant commandé par une came (38-38'), ces cames étant montées sur l'axe des galets porte-griffes et actionnées dès que le film plastique est pincé puis décollé de manière à éloigner le contre-cylindre correspondant pendant la rotation des galets porte-griffes.

5- Dispositif selon l'une quelconque des revendications précédentes caractérisé en ce que le dispositif comporte deux paires de galets porte-griffes (12a, 12b-12'a,12'b), un galet porte-pinces (26a-26b) étant placé entre les galets de chaque paire de galets porte-griffes.

6- Dispositif selon l'une quelconque des revendications précédentes caractérisé en ce que les moyens pour assurer l'évacuation des films (F-F') décollés des surfaces des plaques sont constitués d'une part par un convoyeur à cordes (34) et d'autre part par des rouleaux presseurs (32), les films étant ensuite emmagasinés dans des récipients de stockage (36-36').

7- Dispositif selon l'une quelconque des revendications précédentes caractérisé en ce que lesdites griffes sont constituées par des cardes à limes.

Fig.1

0267844

FIG. 2

FIG. 3

FIG. 4

FIG. 5